(19) Europäisches Patentamt
European Patent Office
Office européen des brevets

(11) **EP 3 593 296 B1**

(12) **EUROPEAN PATENT SPECIFICATION**

(45) Date of publication and mention of the grant of the patent:
**09.10.2024 Bulletin 2024/41**

(21) Application number: **18763996.8**

(22) Date of filing: **09.03.2018**

(51) International Patent Classification (IPC):
*G06N 99/00* (2019.01)   *B82Y 10/00* (2011.01)
*G06F 9/48* (2006.01)   *G06F 9/54* (2006.01)
*G06F 15/76* (2006.01)   *G06N 10/00* (2022.01)

(52) Cooperative Patent Classification (CPC):
**G06F 15/76; G06F 9/4881; G06F 9/542; G06N 10/00**

(86) International application number:
**PCT/US2018/021838**

(87) International publication number:
**WO 2018/165607 (13.09.2018 Gazette 2018/37)**

(54) **EVENT SCHEDULING IN A HYBRID COMPUTING SYSTEM**

EREIGNISPLANUNG IN EINEM HYBRIDEN DATENVERARBEITUNGSSYSTEM

PLANIFICATION D'ÉVÉNEMENTS DANS UN SYSTÈME INFORMATIQUE HYBRIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.03.2017 US 201762469949 P**
**19.06.2017 US 201762521646 P**

(43) Date of publication of application:
**15.01.2020 Bulletin 2020/03**

(73) Proprietor: **Rigetti & Co, LLC**
**Berkeley CA 94710 (US)**

(72) Inventor: **SMITH, Robert Stanley**
**Berkeley, California 94710 (US)**

(74) Representative: **Fish & Richardson P.C.**
**Highlight Business Towers**
**Mies-van-der-Rohe-Straße 8**
**80807 München (DE)**

(56) References cited:
CN-A- 105 164 705     US-A1- 2006 101 236
US-A1- 2007 239 366     US-A1- 2009 014 714
US-A1- 2016 267 032

• MARK WHITNEY ET AL: "Automated Generation of Layout and Control for Quantum Circuits", ARXIV.ORG, CORNELL UNIVERSITY LIBRARY, 201 OLIN LIBRARY CORNELL UNIVERSITY ITHACA, NY 14853, 2 April 2007 (2007-04-02), XP080279958, DOI: 10.1145/1242531.1242546
• MOSTAFA ELHOUSHI: "Model of a hybrid processor executing C++ with additional quantum functions", MICROPROCESSORS AND MICROSYSTEMS., vol. 38, no. 8, 1 November 2014 (2014-11-01), GB, pages 1000 - 1011, XP093153497, ISSN: 0141-9331, DOI: 10.1016/j.micpro.2014.09.002
• JAMES E LEVY ET AL: "Brief announcement", PARALLELISM IN ALGORITHMS AND ARCHITECTURES, ACM, 2 PENN PLAZA, SUITE 701 NEW YORK NY 10121-0701 USA, 11 August 2009 (2009-08-11), pages 166 - 168, XP058378853, ISBN: 978-1-60558-606-9, DOI: 10.1145/1583991.1584039

**Description**

BACKGROUND

The following description relates to event scheduling in a hybrid computing system.
In some quantum computing architectures, qubits are implemented in superconducting circuits. The qubits can be implemented, for example, in circuit devices that include Josephson junctions. In some systems, circuit devices in a superconducting circuit are controlled by an external control module.
"Automated Generation of Layout and Control for Quantum Circuits," Whitney et. al, describes a computer-aided design flow for quantum circuits, with automatic layout and control logic extraction. "Model of a hybrid processor executing C++ with additional quantum functions", Elhoushi et. al, describes a hybrid quantum processor.

DESCRIPTION OF DRAWINGS

FIG. 1A is a block diagram of an example quantum computing system.
FIG. 1B is a block diagram of another example quantum computing system.
FIG. 2A is a block diagram of an example control system for a quantum computing system.
FIG. 2B is a block diagram of another example control system for a quantum computing system.
FIG. 3 is a flow diagram of an example process for executing a quantum program in a quantum computing system.
FIG. 4 is a diagram of an example quantum logic circuit.
FIGS. 5A-5B are diagrams showing example schedules of control signals that can be used to execute the quantum logic circuit of FIG. 4.

DETAILED DESCRIPTION

The present invention is defined by the claims.
In some aspects of what is described here, a control system schedules events (e.g., control signals and other types of events) in a quantum computing system (e.g., a hybrid classical/quantum computing system). The control system may efficiently schedule the events using a control processor that is programmable using a quantum instruction set (e.g., the quantum programming language Quil described in the publication entitled "A Practical Quantum Instruction Set Architecture" by Smith et al., arXiv:1608.03355v2 [quant-ph], 17 Feb 2017). For instance, the control processor may obtain a quantum program written in Quil and generate an event schedule that includes resource schedules for the respective qubits defined in a quantum processor. The resource schedules may include, for example, control signals to be delivered to the quantum processor and other types of events. The event schedule may include resource schedules for other types of resources (e.g., classical processors and classical memories) and other types of events (e.g., storage of quantum measurements in classical memory, classical computing operations, delays between control signals, etc.).
In some cases, a computing system can be configured to achieve a specified computing regime or paradigm. For instance, a computing system may be configured to achieve pure quantum computation, asynchronous classical and quantum computation, quantum computation with fast feedback based on classical and quantum state, fully hybrid and interleaved classical/quantum computation, hybrid computation with quantum error correction (QEC), or another type of computing regime. Processor speeds, communication speeds, communication bandwidth, component proximity and integration, and other structural and operational aspects of the system may be configured based on the demands of a specified computing regime. For instance, communication links may be configured to provide signal transit times (e.g., point-to-point communication times) that are less than (or otherwise based on constraints imposed by) the coherence time of a quantum processor.
In some aspects, quantum computers can be programmed, which may allow for quantum computing services to be provided, quantum computing subsystems for scientific and industrial applications, quantum operating systems, or integrated classical/quantum chips. In some implementations, a quantum computing system executes a quantum program, and the quantum program does not necessarily include any explicit notion of the time at which precise instructions are executed. A quantum program (e.g., instructions written in the Quil programming language) may be written generally for any quantum computer, without knowledge of the quantum computer's native gate set or architecture, and a scheduler may translate the quantum program to a sequence of operations that are directly executable by the quantum computing system. In some instances, classical control processor can act as an interface to a programmer as well as the primary mode of the scheduling and orchestration of quantum computational events. An interface can be created between a quantum computing device and a programmer that abstracts away details of how a quantum or hybrid classical/quantum computation is performed. In some implementations, for example, quantum programs are loaded into memory of a hybrid classical/quantum computer (just like classical programs can be with classical computers), and are executed by way of a similar process on a quantum processor cell.

In some implementations, control signals are scheduled by a control system in a quantum computing system based on a linearly-written quantum program. The control system may have an architecture similar to the Von Neumann architecture. For instance, the control system may provide a generic programmable quantum architecture without specific regard to the particular control electronics or interconnects used, and may be integrated onto a single chip. The control system can implement such an architecture, for example, using a central processing unit (CPU), memory. The CPU may control the overall execution of the program and perform arithmetic operations, and may contain a set of data registers to hold temporary data being acted upon (e.g., which was loaded from or stored to memory) as well as an instruction register or program counter which contains the next instruction to execute (or the location in memory where the next instruction to execute is). The CPU may implement an instruction cycle or a fetch-decode-execute cycle.

Some aspects may include a hardware device which allows humans or other computer information systems to program a quantum computing system; a process (implemented in hardware, software, or a combination thereof) for processing a programmer-provided program and preparing it for execution; a hardware device that schedules and orchestrates computations on the quantum computing system; a hardware device which efficiently produces and digitizes control signals for execution in a quantum processor; and an integrated, closed system in which these devices work synchronously. In some implementations, a quantum computing system includes a generic programmable hybrid classical/quantum architecture without specific regard to the particular control electronics or interconnects used. In some implementations, all components of such a system are integrated onto a single chip.

A programmable quantum computing system may allow for all-in-one quantum computing hardware packages, internet-delivered quantum computing services, or other quantum computing implementations. A programmable quantum computing system, such as a hybrid classical/quantum computer, may supersede supercomputers in computing performance and efficiency, and may be used in pharmaceutical applications (e.g., drug discovery), chemical engineering and synthesis, machine learning and artificial intelligence, medicine or medical diagnosis, or other applications which might benefit from high-performance computers.

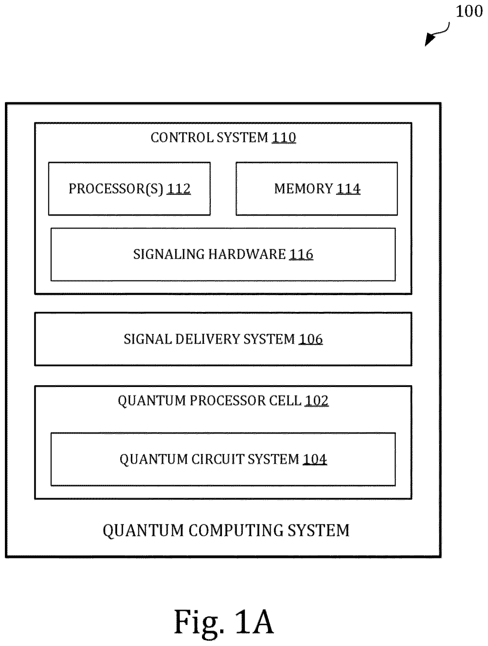

FIG. 1A is a schematic diagram of an example quantum computing system 100. The example quantum computing system 100 shown in FIG. 1A includes a control system 110, a signal delivery system 106, and a quantum processor cell 102. A quantum computing system may include additional or different features, and the components of a quantum computing system may operate as described with respect to FIG. 1A or in another manner.

The example quantum computing system 100 shown in FIG. 1A can perform quantum computational tasks by executing quantum algorithms. In some implementations, the quantum computing system 100 can perform quantum computation by storing and manipulating information within individual quantum states of a composite quantum system. For example, qubits (i.e., quantum bits) can be stored in and represented by an effective two-level sub-manifold of a quantum coherent physical system. In some instances, quantum logic can be performed in a manner that allows large-scale entanglement within the quantum system. Control signals can manipulate the quantum states of individual qubits and the joint states of the multiple qubits. In some instances, information can be read out from the composite quantum system by measuring the quantum states of the individual qubits.

The example quantum computing system 100 shown in FIG. 1A can perform classical computational tasks by executing classical algorithms. In some implementations, the quantum computing system 100 can perform classical computation by storing and manipulating information within individual digital states of a binary system. For example, bits can be stored in and represented by an effective two-level physical system. In some instances, binary logic can be applied to the bits to manipulate the states of individual bits and the joint states of the multiple bits. In some instances, information can be read out from the binary system by measuring the individual bits.

In some implementations, the quantum computing system 100 can operate using gate-based models for quantum computing. In some models, fault-tolerance can be achieved by applying a set of high-fidelity control and measurement operations to the qubits. For example, topological quantum error correction schemes can operate on a lattice of nearest-neighbor coupled qubits. In some instances, these and other types of quantum error correcting schemes can be adapted for a two- or three-dimensional lattice of nearest neighbor coupled qubits, for example, to achieve fault-tolerant quantum computation. Adjacent pairs of qubits in the lattice can be addressed, for example, with two-qubit logic operations that are capable of generating entanglement, independent of other pairs in the lattice.

In some implementations, the quantum computing system 100 is constructed and operated according to a scalable quantum computing architecture. For example, in some cases, the architecture can be scaled to a large number of qubits to achieve large-scale general purpose coherent quantum computing. In some instances, the architecture is adaptable and can incorporate a variety of modes for each technical component. For example, the architecture can be adapted to incorporate different types of qubit devices, coupler devices, readout devices, signaling devices, etc.

In some instances, all or part of the quantum processor cell 102 functions as a quantum processor unit. In some examples, the quantum processor cell 102 includes a quantum circuit system. The quantum circuit system may include qubit devices, resonator devices and possibly other devices that are used to store and process quantum information. In some implementations, the quantum circuit system is a superconducting quantum circuit system, in which various circuit elements are capable of operating in a superconducting state. In some implementations, the quantum circuit system is an integrated quantum circuit (e.g., an integrated superconducting quantum circuit).

In some implementations, the example quantum processor cell 102 can process quantum information by applying control signals to the qubit devices or to the coupler devices housed in the quantum processor cell 102. The control signals can be configured to encode information in the qubit devices, to process the information by performing quantum logic gates or other types of operations, or to extract information from the qubit devices. In some examples, the operations can be expressed as single-qubit logic gates, two-qubit logic gates, or other types of quantum logic gates that operate on one or more qubits. A sequence of quantum logic operations can be applied to the qubits to perform a quantum algorithm.

In the example shown, the example quantum processor cell 102 includes a quantum circuit system 104. In some instance, the example quantum circuit system 104 includes superconducting quantum circuit devices. For example, the quantum circuit system 104 may include superconducting qubit devices that each store a single qubit of information, and the qubits can collectively represent the computational state of a quantum processor. In some cases, the quantum circuit system 104 may include resonator devices coupled to the respective qubit devices, for instance, where each qubit device includes a superconducting quantum interference device (SQUID) loop and is capacitively coupled to a neighboring resonator device. The readout devices may be configured to generate readout signals that indicate the computational state of the quantum processor unit. In some examples, some of the circuit devices in the quantum circuit system 104 are coupler devices that selectively operate on individual qubits or pairs of qubits. For example, the coupler devices may produce entanglement or other multi-qubit states over two or more qubits.

The example quantum circuit system 104 can include connections between neighboring pairs of circuit devices. The connections can provide electromagnetic communication between the connected circuit devices. In some cases, the connections are implemented as capacitive, conductive or inductive signaling connections. For instance, the connections may include metal traces, capacitors, flux loops and other components. The superconducting circuit devices may be operated by radio frequency (RF) or microwave signals delivered in the quantum circuit system 104, for example, from the control system 110. Signals may be exchanged among the circuit devices through the connections or other signal pathways in the quantum circuit system 104.

The circuit devices in the quantum circuit system 104 may be arranged in one or more regular or irregular arrays. For instance, qubit devices may be arranged in a rectilinear (e.g., rectangular or square) array that extends in two spatial dimensions (in the plane of the page), where each qubit device has two or more nearest-neighbor qubit devices. Qubit devices can be arranged in another type of regular or irregular array (e.g., a triangular array, a hexagonal array, etc.). In some instances, an array of circuit devices extends in a third spatial dimension (in/out of the page), for example, to form a cubic array or another type of regular or irregular three-dimensional array.

In the example shown in FIG. 1A, the signal delivery system 106 provides communication between the control system 110 and the quantum processor cell 102. For example, the signal delivery system 106 can receive control signals from the control system 110 and deliver the control signals to the quantum processor cell 102. In some instances, the signal delivery system 106 performs preprocessing, signal conditioning, or other operations to the control signals before delivering them to the quantum processor cell 102.

In some instances, the signal delivery system 106 receives qubit readout signals from the quantum processor cell and delivers the qubit readout signals to the control system 110. In some instances, the signal delivery system 106 performs preprocessing, signal conditioning or other operations on the readout signals before delivering them to the control system 110. In some implementations, the signal delivery system 106 includes include input and output processing hardware, input and output connections, and other components. The input and processing hardware may include, for example, filters, attenuators, directional couplers, multiplexers, diplexers, bias components, signal channels, isolators, amplifiers, power dividers and other types of components.

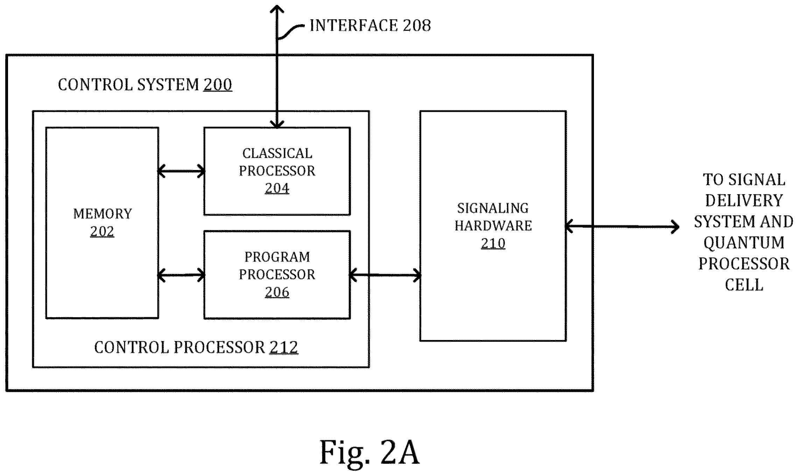

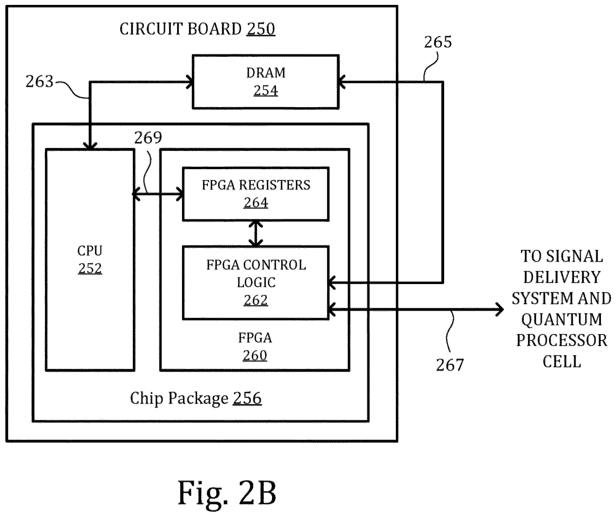

In the example quantum computing system 100 shown in FIG. 1A, the control system 110 controls operation of the quantum processor cell 102. The example control system 110 may include data processors, signal generators, interface components and other types of systems or subsystems. The control system 110 includes one or more classical computers or classical computing components. In some cases, one or more components of the control system 110 can be implemented as the example control system 200 shown in FIG. 2A, as the example circuit board 250 shown in FIG. 2B, or otherwise.

FIG. 1A shows an example control system 110 that includes one or more processors 112, a memory 114, and signaling hardware 116. The signaling hardware 116 may include, in some implementations, radio frequency (RF) or microwave ($\mu$W) generators, radio frequency (RF) or microwave ($\mu$W) receivers, DC sources, or other type of radio frequency (RF) or microwave ($\mu$W) devices. The control system 110 may include additional or different features and components. In some examples, components of the control system 110 operates in a room temperature regime, an intermediate temperature regime, or both. For example, the control system 110 can be configured to operate at much higher temperatures and be subject to much higher levels of noise than are present in the environment of the quantum processor cell 102.

In some implementations, the control system 110 includes a classical computing cluster, servers, databases, networks, or other types of classical computing equipment. For example, the memory 114 can include, for example, a random-access memory (RAM), a storage device (e.g., a writable read-only memory (ROM) or others), a hard disk, or another type of storage medium. The memory 114 can include various forms of memory, media and memory devices, including by way of example semiconductor memory devices (e.g., EPROM, EEPROM, flash memory devices, and others), magnetic disks (e.g., internal hard disks, removable disks, and others), magneto optical disks, and CD ROM and DVD-ROM disks. The processors 112 may include one or more single- or multi-core microprocessors, one or more FPGAs or ASICs, one or more other types of data processing apparatus. The processors 112 can generate control information, for example, based on a quantum program (e.g., a quantum logic circuit, a quantum simulation, a quantum algorithm, etc.) or a hybrid classical/quantum program to be performed by the quantum computing system 100 or based on other types of information.

In some implementations, radio frequency (RF) or microwave ($\mu$W) generators and DC sources of the signaling hardware 116 can each generate control signals based on control information provided by the processors 112. The control signals can be delivered to the quantum processor cell 102 by the signal delivery system 106, for example, and interact with circuit devices in the quantum circuit system 104. In some implementations, radio frequency (RF) or microwave ($\mu$W) receivers in the signaling hardware 116 can receive and process signals from the quantum processor cell 102. For example, receivers in the signaling hardware 116 can include a digitizer, a microwave source, and other types of signal processing components. The receivers of the signaling hardware 116 can process (e.g., digitize, or otherwise process) the signals from the quantum processor cell 102 and provide the processed information to the processors 112. The processors 112 can extract data, for example, to identify the quantum states of qubits in the quantum processor cell 102 or for other purposes.

In some instances, the quantum computing system operates as a hybrid computing system (i.e., hybrid classical/quantum computing system) by using one or more classical processors (e.g., processors 112) and one or more quantum processors (e.g., quantum processor cell 102) in a coordinated manner. For example, operating as a hybrid computing system the quantum computer system 100 executes a program that leverages classical computing resources and quantum computing resources. In some cases, the program provides an interface between the classical and quantum processors in the hybrid computing system, for example, by providing inputs to a classical processor based on outputs from a quantum processor, or by providing inputs to a quantum processor based on outputs from a classical processor.

In some instances, the control system 110 generates classical signals, including electrical waveforms or laser fields, which interact with devices in the quantum processor cell 102 to operate the quantum computing system 100; and the control system 110 may also receive classical signals back from the devices.

In some instances, the quantum computing system 100 operates based on a clock cycle or another type of synchronization scheme. For example, a quantum algorithm or quantum processing task may be expressed as a sequence of instructions corresponding to quantum gates, readouts, or other operations on the qubit devices, and a subset of the instructions can be executed on each clock cycle. In some instances, on each clock cycle, the control system 110 generates control signals to implement a subset of instructions, control signals are delivered to the quantum processor cell 102, and qubit readout signals are delivered to the control system 110. The control signals delivered on each clock cycle can be configured, for example, based on the sequence of instructions, based on readout signals from a previous cycle, quantum error correction operations, error matching calculations, other information, or a combination of these.

In some implementations, the control system 110 generates a schedule of control signals for execution on the quantum processor cell 104. The control signals may be scheduled based on a quantum program (e.g., a program written in the Quil programming language described in the publication entitled "A Practical Quantum Instruction Set Architecture" by Smith et al., arXiv:1608.03355v2 [quant-ph], 17 Feb 2017). The control system 110 may generate schedule of control signals according to a variety of possible optimization criteria. For instance, the schedule may be configured to increase (e.g., optimize or otherwise improve) quantum process fidelity (e.g., by reducing cross-talk, etc.) or another measure of computational accuracy; the schedule is configured to reduce (in some cases, minimize or otherwise optimize) an overall amount of time spent by a quantum computing system implementing the control signals, making execution of a quantum program on the quantum computing system more efficient. Qubits are made available for interaction with additional control signals sooner. The control system 110 optimizes a schedule of control signals according to one or more techniques described in the techniques described below.

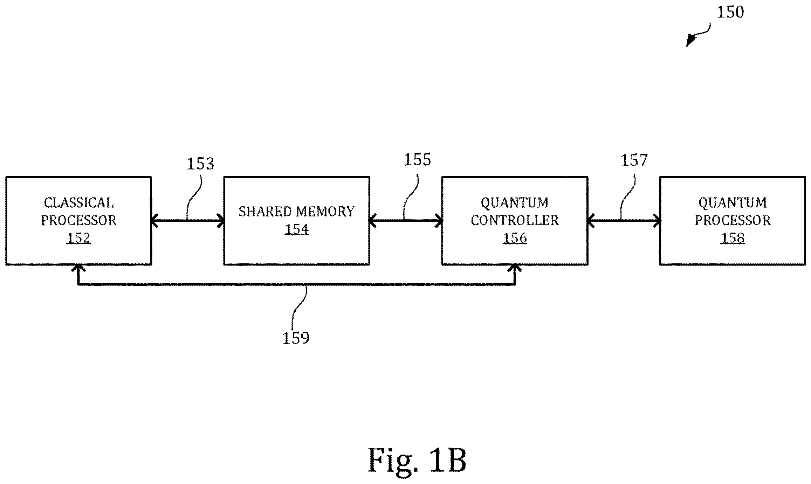

FIG. 1B is a block diagram of another example quantum computing system 150. The example quantum computing system 150 shown in FIG. 1B includes a classical processor 152, a shared memory 154, a quantum controller 156, and a quantum processor 158. The quantum computing system 150 may include additional or different features, and the features may be configured as shown or in another manner.

The classical processor 152 in FIG. 1B may be implemented, for example, as the classical processor 204 shown in FIG. 2A, as the CPU 252 in FIG. 2B, as a processor (e.g., a CPU) or co-processor on a laptop or desktop computer or a server, or another type of classical computing system or device. The shared memory 154 in FIG. 1B may be implemented, for example, as the memory 202 in FIG. 2A, as the DRAM 254 in FIG. 2B, as the FPGA registers 264 in FIG. 2B, as state memory (e.g., registers or on-chip hierarchical cache) of a processor (e.g., a CPU) or co-processor on a laptop or desktop computer or a server, as a buffer memory, or another type of classical computing system or device. The quantum controller 156 in FIG. 1B can be implemented as the signaling hardware 210 in FIG. 2B, as the signaling hardware 116 and signal delivery system 106 in FIG. 1A, as the program processor 206 in FIG. 2A, or as another type of signaling hardware.

The quantum processor 158 in FIG. 1B can be implemented as the quantum processor cell 102 in FIG. 1A or another type of quantum processor unit (QPU) that can perform quantum computations. In some cases, the quantum processor 158 includes a superconducting circuit, and the qubit devices are implemented as circuit devices that include Josephson junctions, for example, in superconducting quantum interference device (SQUID) loops or other arrangements, and are controlled by radio-frequency signals, microwave signals, and bias signals delivered to the quantum processor 158. In some cases, the quantum processor 158 includes an ion trap system, and the qubit devices are implemented as trapped ions controlled by optical signals delivered to the quantum processor 158. In some cases, the quantum processor 158 includes a spin system, and the qubit devices are implemented as nuclear or electron spins controlled by microwave or radio-frequency signals delivered to the quantum processor 158. The quantum processor 158 may be implemented based on another physical modality of quantum computing.

In some implementations, the quantum processor 158 can operate using gate-based models for quantum computing. For example, the qubits can be initialized in an initial state, and a quantum logic circuit comprised of a series of quantum logic gates can be applied to transform the qubits and extract measurements representing the output of the quantum computation. In some implementations, the quantum processor 158 can operate using adiabatic or annealing models for quantum computing. For instance, the qubits can be initialized in an initial state, and the controlling Hamiltonian can be transformed adiabatically by adjusting control parameters to another state that can be measured to obtain an output of the quantum computation.

As shown in FIG. 1B, the classical processor 152 communicates with the shared memory 154 through a first link 153, the shared memory 154 communicates with the quantum controller 156 through a second link 155, the quantum controller 156 communicates with the quantum processor 158 through a third link 157, and the classical processor 152 communicates with the quantum controller 156 through a fourth link 159. The quantum computing system 150 may include additional or different links, including links that are shared by more than two components. In some cases, one or more components of the quantum computing system 150 uses Direct Memory Access (DMA) or another memory access scheme to access information stored in the shared memory 154.

Each of the links 153, 155, 157, 159 shown in FIG. 1B can include all or part of one or more connectors, ports, signal lines, data channels, data networks or other types of communication links. In some cases, one or more of the links 153, 155, 157, 159 can include wired or wireless connections, wired or wireless networks or other communication channels. The links 153, 155, 157, 159 may provide communication over short distances (e.g., on the order of nanometers to centimeters, etc.) within an integrated system or component (e.g., within a circuit board or a chip, between distinct circuit boards or chips in a device, etc.), over long distances (e.g., on the order of kilometers or tens or hundreds of kilometers) in the context of cloud or network-based systems (e.g., between remote sites or distributed system components), or intermediate distances (e.g., less than a meter, or on the order of meters) within a contained or system or subsystem (e.g., between separate components, between different environments in a system, etc.).

In some cases, the links 153, 155, 157, 159 can be selected and configured based on time requirements for signals transferred between the components during operation of the quantum computing system 150. The typical or characteristic time required to transfer a signal over a link, from one component to another, can be referred to as $\Delta t$. One or more of the links 153, 155, 157, 159 may provide fast communication speeds, for example, between components that are integrated into a common structure or system. For example, a link may include waveguides, coaxial cables, microstrip lines, feedthrough devices, conductive leads or contacts, signal ports, data buses, or other components that provide fast communication. In some cases, such links can be used to achieve $\Delta t$ on the order of microseconds, nanoseconds, or shorter. One or more of the links 153, 155, 157, 159 may provide slower communication speeds, for example, between components that are remote from each other. For example, a link may include a wired or wireless data network (Local Area Network (LAN), a Wide Area Network (WAN), a Virtual Private Network (VPN), the Internet, a peer-to-peer network, a cellular network, a Wi-Fi network, a Personal Area Network (PAN), etc.), wireless connections, a radio or modem interface, or other components that provide slower communication. In some cases, such links can be used to achieve $\Delta t$ on the order of hundreds of milliseconds, seconds, minutes, or longer. One or more of the links 153, 155, 157, 159 may provide intermediate communication speeds, for example, between separate components within a system. For example, a link may include multiple stages, a buffer memory or cache, components that perform data conversion or formatting, etc. In some cases, such links can be used to achieve $\Delta t$ on the order of tens to hundreds of milliseconds.

In some implementations, the links 153, 155, 157, 159 are configured to provide a specified computing regime or paradigm in the quantum computing system 150. In some cases, the quantum computing system 150 is configured for pure quantum computation. In the pure quantum computing regime, the quantum processor 158 performs a quantum computation (e.g., by executing a quantum algorithm) and provides an output to the quantum controller 156, and the quantum computation does not depend on feedback or computations performed by the classical processor 152 or on information in the shared memory 154. In such cases, there are not necessarily any hard time, speed, or distance constraints for the links 153, 155, 159. For some quantum computations in the pure quantum regime, the quantum controller 156 can compile a control sequence and deliver the control sequence to the quantum processor 158, and the quantum processor 158 can execute the control sequence without feedback from the quantum controller 156. In such cases, there are not necessarily any hard time, speed, or distance constraints for the link 157.

In some cases, the quantum computing system 150 is configured for asynchronous classical and quantum computation. In the asynchronous classical and quantum computation regime, the quantum processor 158 performs a quantum computation (e.g., by executing a quantum algorithm) and provides an output to the quantum controller 156, which places the output in the shared memory 154; the classical processor 152 then performs a classical computation based on the output (e.g., by retrieving the output from the shared memory 154); and the process may be iterated. In such cases, the output of the classical computation may be provided as an input to a new quantum computation, but the quantum computation does not require new classical computation or other feedback to be generated or provided during the quantum computation. In such cases, the coherence times of the quantum processor do not provide a time constraint for the links 153, 155, 157, 159. Practical implementations of the asynchronous classical and quantum computation regime may be achieved, for example, when the links 153, 155, 159 are configured to achieve $\Delta t$ on the order of seconds or shorter.

In some cases, the quantum computing system 150 is configured for quantum computation with fast feedback based on classical and quantum state (or "fast feedback computation" regime). In the fast feedback computation regime, at least some operations in the quantum computation performed by the quantum processor 158 require feedback from the quantum controller 156 during the quantum computation. For instance, for quantum computations that require measurement-based quantum logic gates (e.g., classically controlled gates), or other types of fast feedback, the quantum controller 156 must be able to deliver a control sequence to the quantum processor 158 in a characteristic time $\Delta t$ that is less than the coherence time of the quantum processor 158. In such cases, the coherence times of the quantum processor 158 provide a time constraint for the link 157. For instance, if a typical coherence time of the quantum processor is 5 microseconds, the link 157 could be configured to achieve $\Delta t$ less than 500 nanoseconds. In some cases, coaxial cables, waveguides, microstrip lines or other types of signal lines may be used to achieve communication times needed for the fast feedback computation regime.

In some cases, the quantum computing system 150 is configured for fully hybrid and interleaved classical/quantum computation. In the fully hybrid and interleaved classical/quantum computation regime, at least some operations in the quantum computation performed by the quantum processor 158 require output to be generated by the classical processor (provided through the shared memory 154 and the quantum controller 156) during the quantum computation. For instance, for quantum computations that require classical computation during the quantum computation, the quantum computing system 150 must be able to perform the classical computation and deliver a control sequence to the quantum processor 158 in a characteristic time $\Delta t$ that is less than the coherence time of the quantum processor 158. In such cases, the coherence times of the quantum processor, and the complexity and speed of the classical computation, provide a time constraint for the links 153, 155, 157, 159. For instance, if a typical coherence time of the quantum processor is 5 microseconds, the links 153, 155, 157, 159 may be configured to achieve $\Delta t$ less than 100 nanoseconds, less than 20 nanoseconds, or shorter. In some cases, coaxial cables, waveguides, microstrip lines or other types of signal lines may be used to achieve communication times needed for the fully hybrid and interleaved classical/quantum computation regime.

In some cases, the quantum computing system 150 is configured for hybrid classical/quantum computation, with quantum error correction. To achieve this regime, a quantum error correcting (QEC) code may applied to the quantum processor 158 to preserve quantum states (e.g., some aspects or subsets of the quantum states) beyond the characteristic coherence time of the quantum processor 158, and may be used to achieve fault-tolerant quantum computation in some cases. In such regimes, fewer constraints may be placed on the links 153, 155, 157, 159, for example, when the effective coherence time of the quantum processor 158 can be extended indefinitely by QEC. Accordingly, practical implementations of hybrid classical/quantum computation with QEC may be achieved, for example, when the links 153, 155, 159 are configured to achieve $\Delta t$ on the order of seconds or shorter.

In some cases, attributes of one or more lower-complexity computing regimes provide features that are necessary (though not necessarily sufficient) for implementing higher-complexity regimes. For example, the pure quantum computation regime, the asynchronous classical and quantum computation regime, and the fast feedback computation regime can be used to bootstrap the fully hybrid and interleaved classical/quantum computation regime. For instance, if the pure quantum computation regime, the asynchronous classical and quantum computation regime, and the fast feedback computation regime are implemented well enough (e.g., with sufficiently low $\Delta t$), then they may be used together as the foundation for fully hybrid and interleaved classical/quantum computation. As another example, hybrid classical/quantum computation with QEC may be directly bootstrapped by the other four regimes described above. In some cases, QEC can be seen as an algorithm or set of algorithms that run on top of the other regimes.

In some instances, events are scheduled in the quantum computing system 150 to achieve one or more of the computing regimes described above. For example, an event schedule, when executed in the quantum computing system 150, coordinates operation of the computing resources (e.g., the classical processor 152, the quantum processor 158, etc.) in the quantum computing system 150. The events include forming a gate, making a quantum measurement (e.g., a projective measurement of a qubit defined in the quantum processor 158), making a quantum measurement which interacts with the shared (e.g., classical) memory 154, control signals and delays between control signals, and other types of events. The events can controlled by, for example, DC/RF pulses or optical pulses to form gates or to make quantum measurements, electrical signals to control storage of data in the classical memory 154 or to perform classical computations, or otherwise. The resources that are coordinated by the schedule include, for example, quantum resources such as qubits (e.g., qubits defined in a superconducting quantum circuit, a trapped ion system, a spin system, etc.), classical resources such as memory and classical processors, fine-grained quantum resources (e.g., an RF gate line for a qubit and a read-out line for the same qubit, optical channels for qubits, etc.), or classical-quantum synchronization (e.g., measurement of a qubit into a classical memory). The event schedule can be stored in memory and executed by the quantum computing system 150. The event schedule can associate a particular time order for each event, and provide a time-based sequence of the events for execution in the quantum computing system 150.

FIG. 2A is a block diagram of an example control system 200 for a quantum computing system. In some instances, the example control system 200 represents a control system for a programmable hybrid classical/quantum computer. In some instances, the control system 200 is implemented as the control system 110 of FIG. 1A. For example, the control system 200 may be implemented in a quantum computing system similar to the quantum computing system 100 of FIG. 1A, and may generate control signals for a quantum processor cell similar to the quantum processor cell 102 of FIG. 1A.

In the example shown, the control system 200 includes a control processor 212 and signaling hardware 210. The control processor 212 includes a memory 202, a classical processor 204, a program processor 206, and an interface 208. The control system may include additional or different components, and they may be arranged as shown or in another manner. In some cases, some or all components of the control system 200 can be implemented in a single package or assembly.

The example control processor 212 may be implemented as one or more Application-Specific Integrated Circuits (ASICs) along with a microprocessor, or as a single integrated package (e.g., as a Field Programmable Gate Array (FPGA)/ Advanced RISC Machines (ARM) package (e.g., ALTERA CYCLONE V or ZYNQ)). The control processor 212 can obtain quantum programs and store them (or compiled versions of them) in the memory 202. In some implementations, the control processor 212 interacts with an external system using the interface 208. For example, an external system may interact with the control processor 212 (e.g., instructions may be sent to and received from the control processor 212), similar to the way the external system would interact with a classical computer running an operating system such as GNU/LINUX.

The signaling hardware 210 may be similar to the signaling hardware 116 of FIG. 1A. For example, the signaling hardware 210 may include radio frequency (RF) or microwave ($\mu$W) components for generating control signals for qubit devices or other devices of a quantum processor cell. The signaling hardware 210 may be configured to couple the control system 200 to a quantum processor unit. For example, the signaling hardware 210 may connect the control system 200 to a quantum circuit system using coaxial cables, waveguides or other components. In the example shown in FIG. 2A, the signaling hardware 210 is coupled to a quantum processing cell via a signal delivery system, similar to the signaling hardware 116, quantum processing cell 104, and signal delivery system 106 of FIG. 1A. In some implementations, the signaling hardware 210 is integrated into the control processor 212, with the signaling hardware 210 and the control processor 212 being conductively connected using electrical traces (e.g., conductive traces formed on a substrate). In some implementations, the signaling hardware 210 is distinct from the control processor 212. The signaling hardware 210 and control processor 212 may be connected in such implementations using any number of interconnects and protocols, such as, for example, TCP/IP over Ethernet. As shown in FIG. 2A, the signal hardware 210 can interface with components of the control processor 212. For example, the signal hardware 210 may have a direct connection to, and directly communicate with, one or more of the classical memory 202, the classical processor 204, the program processor 206, or other components.

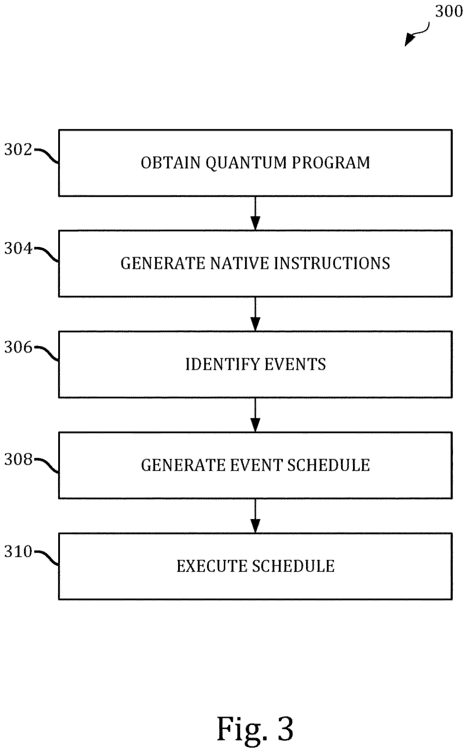

The example classical processor 204 executes instructions based on classical programs. The classical processor 204 may be implemented as CPU that includes a set of data registers that store temporary data being used by the CPU and an instruction register which stores the next instruction to execute or a location in the memory 202 where the next instruction to execute is. The classical processor 204 may be user-programmable. In some implementations, the classical processor 204 hosts a compiler or other program-transforming programs. External systems may interact with the classical processor 204, for example, via the interface 208. In some implementations, the classical processor 204 is implemented as an INTEL IA-64 or ARM processor, and the classical processor 204 may run operating systems such as GNU/LINUX which allow for a traditional programming interface. The classical processor 204 is coupled to, and has access to, the memory 202. In some implementations, the classical processor 204 can process a quantum program and schedule control signals for a quantum computing system based on the quantum program. For example, the classical processor 204 may implement one or more operations in the process 300 of FIG. 3 to optimize a schedule of control signals for a quantum computing system.

The program processor 206 executes instructions based on quantum programs, and in some cases, instructions based on classical programs. Quantum programs may include a set of instructions written to be executed by a quantum computing system or a hybrid classical/quantum computing system The program processor 206 may be implemented using an FPGA in some instances. In some implementations, the program processor 206 executes a state machine for a quantum computing system, autonomously controlling the signaling hardware 210 according to instructions of a quantum program stored in the memory 202. In some implementations, the program processor 206 can effect changes in both classical and quantum computing hardware. For example, the program processor 206 can effect a change in a classical state (e.g., in the memory 202) or a quantum state (e.g., in qubits of a quantum processor unit coupled to the signaling hardware 210). The program processor 206 is coupled to, and has access to, the memory 202, and the instructions for the state changes can be obtained from the memory 202. The instructions may be specified in terms of the time at which they are to be performed and the action to be performed. The instructions for execution by the program processor 206 may be based on a quantum program, such as, for example, a quantum program written in the Quil programming language as described in the publication entitled "A Practical Quantum Instruction Set Architecture" by Smith et al., arXiv:1608.03355v2 [quant-ph], 17 Feb 2017. The instructions may transition a state of the program processor 206. For example, the instructions may transition a quantum state of the quantum processor unit, a classical state of information stored in the memory 202, or an ancillary state within the program processor 206 (e.g., the current instruction or state of the state machine). After the instructions are executed by the program processor 206, a result may be received in response from the quantum computing system, and the result may be stored in the memory 202.

The memory 202 may include persistent (e.g., read-only memory (ROM)), ephemeral memory (e.g., random access memory (RAM)), CPU registers, or a combination thereof. The memory 202 may be accessible by both the classical processor 204 and the program processor 206. In some implementations, the memory 202 stores data generated from an execution of a classical program, a quantum program, or a combination thereof. For example, the memory 202 may store measurement data, quantum gate parameter data, or other data received based on interactions with a quantum computing system. In some implementations, the memory 202 stores classical program instructions, quantum program instructions, or a combination thereof. In some instances, the instructions stored in the memory 202 have been processed (e.g., compiled) on the classical processor 204 for execution by the program processor 206. For example, the memory 202 may store instructions compiled by the classical processor 204 based on a quantum program written in the Quil programming language described in the publication entitled "A Practical Quantum Instruction Set Architecture" by Smith et al., arXiv:1608.03355v2 [quant-ph], 17 Feb 2017, which are to be executed by the program processor 206 on a quantum computing system.

FIG. 2B is a block diagram of another example control system for a quantum computing system. In some instances, the example control system in FIG. 2B represents a control system for a programmable hybrid classical/quantum computer. In some instances, the control system is implemented as the control system 110 of FIG. 1A. For example, the control system in FIG. 2B may be implemented in a quantum computing system similar to the quantum computing system 100 of FIG. 1A, and may generate control signals for a quantum processor cell similar to the quantum processor cell 102 of FIG. 1A.

In the example shown in FIG. 2B, the control system includes a circuit board 250 that supports a chip package 256 and a dynamic random access memory (DRAM) 254. The chip package 256 includes a CPU (e.g., an Advanced RISC Machines (ARM) unit, or another type of CPU) and a Field Programmable Gate Array (FPGA) 260. The chip package 256 may be implemented, for example, as an ALTERA CYCLONE V or ZYNQ package. The FPGA 260 includes FPGA registers 264 and FPGA control logic 262. The control system in FIG. 2B may include additional or different components, and they may be arranged as shown or in another manner.

The control system in FIG. 2B also includes communication links between the various components. As shown, the link 263 provides communication between the CPU 252 and the DRAM 254, the link 265 provides communication between the DRAM 254 and the FPGA control logic, the link 267 provides communication between the chip package 256 and the quantum processor cell, and the communication link 269 provides communication between the CPU 252 and the FPGA register 264.

In some cases, the links and other components in the control system shown in FIG. 2B can be configured to achieve a specified computing regime or paradigm. For instance, the CPU 252 in FIG. 2B can function as the classical processor 152 in FIG. 1B; the DRAM 254 or the FPGA registers 264 (or both) in FIG. 2B can function as the shared memory 154 in FIG. 1B; the FPGA control logic 262 in FIG. 2B can function as the quantum controller 156 in FIG. 1B; the link 263 in FIG. 2B can function as the link 153 in FIG. 1B; the link 265 in FIG. 2B can function as the link 155 in FIG. 1B; and the link 267 in FIG. 2B can function as the link 157 in FIG. 1B. Accordingly, the pure quantum computing regime, the asynchronous classical and quantum computing regime, the fast feedback computing regime, the fully hybrid and interleaved classical/quantum computing regime, the hybrid computing regime with QEC, or another computing regime may be achieved by configuring the links 263, 265, 267 and other components in FIG. 2B according to the constraints described above with respect to the links 153, 155, 157, 159 and other components in FIG. 1B.

FIG. 3 is a flow diagram of an example process 300 for executing a quantum program in a quantum computing system. In some implementations, the example process 300 is executed by a control system of a quantum computing system (e.g., the control system 110 or the control system 200 of FIGS. 1 and 2, respectively). For example, referring to the example control system 200 of FIG. 2A, operations 302, 304, 306, 308 of the process 300 may be performed by the classical processor 204 to generate a schedule of control signals and store the schedule in the memory 202, and the control signals may be executed at 310 by the program processor 206 in accordance with the schedule. Operations may be programmed in hardware, software, firmware or combinations thereof.

At 302, a quantum program is obtained. The quantum program may be a set of instructions written to be executed by a quantum computing system or a hybrid classical/quantum computing system (e.g., to effect changes in classical and quantum states of a quantum computing system as described above with respect to the example control system 200 of FIG. 2A). For example, in some instances, the quantum program includes an instruction set written in the Quil programming language as described in the publication entitled "A Practical Quantum Instruction Set Architecture" by Smith et al., arXiv:1608.03355v2 [quant-ph], 17 Feb 2017, or another computer programming language. The quantum program may be obtained by accessing instructions stored in a memory or in another manner.

At 304, native instructions are generated. The native instructions may be instructions for a particular quantum computing system architecture that will execute the quantum program obtained at 302. For instance, quantum computing systems may have a unique architecture with qubit devices or other devices arranged in a particular manner. The quantum program instructions may be generic to the particular architecture of the quantum computing system, and the quantum program may be optimized, refined, or otherwise modified so that it contains a set of operations that are natively executable on the quantum computing system. The native instructions may include, for example, a sequence of quantum logic gates that can be applied directly in the quantum processor unit of the quantum computing system.

At 306, events are identified based on the native instructions generated at 304. The events may be configured, for example, to encode information in qubit devices, to process the information by performing quantum logic gates or other types of operations, or to extract information from qubit devices. For example, in some instances, the events are microwave pulses configured to stimulate a qubit device, a resonator device, or another type of microwave quantum circuit device. As another example, in some instances, the events are optical pulses configured to stimulate a trapped ion or another type of quantum optical system. In some implementations, information about the control signals (e.g., pulse profiles describing a pulse magnitude, shape, etc. for each signal) may be stored in a memory (e.g., the memory 202 of FIG. 2A). The stored control signal information may be accessed based on the native instructions generated at 304. For instance, certain pulse profiles may be accessed for scheduling (at 308) based on certain native instructions. As an example, a pulse profile for applying a particular quantum logic gate to a particular qubit or set of qubits may be accessed based on a name or other identifier of the quantum logic gate. The events may be configured, for example, to encode information in classical memory, to process the information by operation of a classical processor, or to store qubit readout data in classical memory.

At 308, a schedule of the events is generated. The scheduling of the events may include laying out a set of instructions to execute the control signals (e.g., microwave or RF signals) and other events in a precise time table. The events may be scheduled according to one or more rules. For example, in some implementations, the events are scheduled according to one or more techniques described in the techniques described below. Once the schedule has been generated, it may be loaded into memory for execution by a state machine (e.g., the program processor 206 of FIG. 2A).

At 310, the schedule generated at 308 is executed. Executing the schedule may include generating and sending control signals to components of a quantum computing system (e.g., qubit devices, resonator devices, or other types of quantum circuit devices), modifying (writing, updating, or other operations) the memory 202, or both, according to the schedule. The event schedule coordinates operation of the resources in the computing system. For example, certain events may be synchronized, an event may be performed in response to an earlier event being completed, events may be initiated in a certain order or in response to certain conditions, or events may be coordinated in another manner.

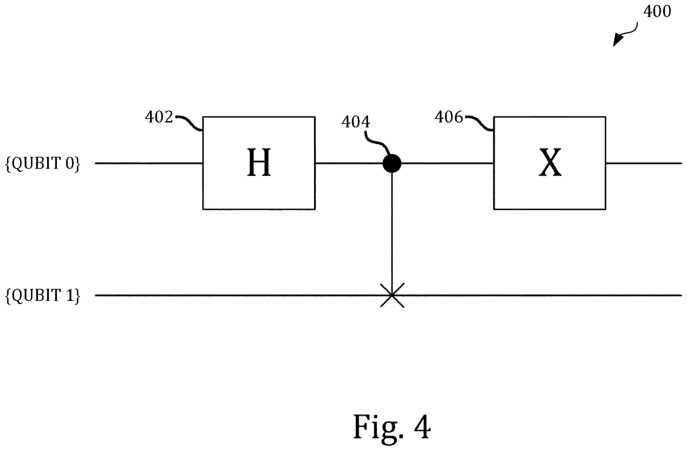

FIG. 4 is a diagram of an example quantum logic circuit 400. The quantum logic circuit 400 of FIG. 4 is a quantum logic circuit for two qubits in a quantum processor unit, and includes a Hadamard gate 402, and controlled not (CNOT) gate 404, and a NOT gate 406. In some implementations, a control system of a quantum computing system (e.g., the control system 110 or the control system 200 of FIGS. 1 and 2, respectively) can generate a schedule of control signals that implements the quantum logic circuit 400. For example, a control system of a quantum computing system may generate a schedule of control signals according to the process 300 of FIG. 3 that implements the gates 402, 404, 406 of the quantum logic circuit 400. In some implementations, the quantum logic circuit can be represented as a human-readable program (e.g., a Quil program) or a computer-readable binary object code.

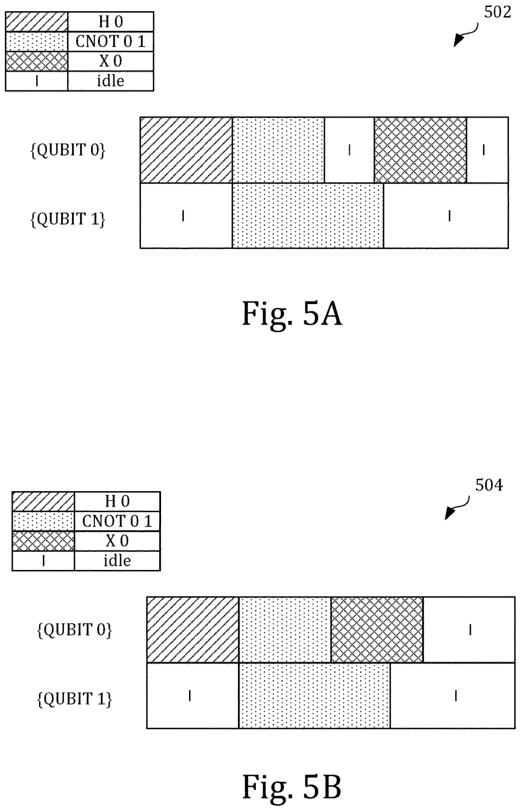

FIGS. 5A-5B are diagrams showing example schedules 502, 504 of control signals that can be used to execute the example quantum logic circuit 400 of FIG. 4. The schedules 502, 504 represent time tables of gate implementations on two qubits (qubits 0 and 1) of a quantum computing system. In the example shown, the horizontal axis represents time and the vertical axis represents resources that a processor (e.g., the program processor 206 of FIG. 2A) can directly or indirectly affect. The schedules 502, 504 represent the logic gates of the quantum logic circuit in terms of events, which may be considered as an action executed on circuit devices in a quantum processor unit over a time period. Other schedules may include events representing actions on resources which may directly refer to resources within other components of the quantum computing system (e.g., the quantum processor cell 102 of FIG. 1A, or the memory 202, classical processor 204, program processor 206, or signaling hardware 210 of FIG. 2A). In some implementations, the schedule 504 is an output of operation 308 of the process 300 of FIG. 3. For example, in some implementations, the schedule 504 is an output of one or more techniques described in the techniques described below.

In the examples shown, the schedules 502, 504 execute the same logic sequence as one another (the quantum logic circuit 400 of FIG. 4). However, the schedule 504 represents a more efficient (e.g., optimized) execution schedule. For instance, in the example schedule 502 shown in FIG. 5A, a Hadamard gate is applied to qubit 0 (e.g., for 50 ns), a CNOT gate is applied to qubits 0 and 1 (with the CNOT gate requiring more time on qubit 1 than on qubit 0, e.g., for 100 ns on qubit 0 and 150 ns on qubit 1). After the CNOT gate has been applied to qubit 1, a NOT gate is applied to qubit 0 (e.g., for 50 ns). The schedule 502 thus leaves qubit 0 with idle time (e.g., 50 ns) as shown in FIG. 5A, while the CNOT gate is executed on qubit 1.

In the example schedule 504 shown in FIG. 5B, the Hadamard gate is applied to qubit 0 (e.g., for 50 ns), a CNOT gate is applied to both qubits 0 and 1 (with the CNOT gate requiring more time on qubit 1 than on qubit 0, e.g., for 100 ns on qubit 0 and 150 ns on qubit 1) as in the schedule 502. While the CNOT gate is being applied to qubit 1 (e.g., while the qubit 1 de-tunes after a 100 ns pulse), a NOT gate is applied qubit 0 (e.g., for 50 ns) in contrast to waiting until the CNOT gate has completed as shown in schedule 502 of FIG. 5A. By executing the schedule 504 rather than the schedule 502, the NOT gate is applied to qubit 0 earlier (e.g., 50 ns earlier). The qubit 0 is accordingly made available for interaction by another control signal sooner with schedule 504 than with schedule 502, freeing up the qubits resources of the quantum computing system.

In some cases, event schedules may be generated using temporal optimization or another technique. One approach to temporal optimization includes instruction parallelization. Some models for parallelization may assume a discrete time series with multiple events (for example, commuting gates), happening in parallel at each time step. Such a method can be referred to as a black box temporal optimization method herein.

Black box temporal optimization may not make use of the finer structure imposed by quantum computing systems. For example, gates and measurements on tunable superconducting microwave circuits may be represented as a combination of microwave pulses (for qubit excitation), magnetic field control (for qubit tuning), and delays (for resonant energy transfer). These, along with a broader class of electromagnetic control, can be characterized by an event lasting over a certain time. Events themselves may have synchronization requirements; some events must happen at a time relative to another event.

Events can be more precisely and more optimally scheduled than that which results from black box temporal optimization. For example, "slack space" in time can be utilized for performing various operations. Such a method can be referred to as white box temporal optimization herein.

Described herein includes a framework for performing white box temporal optimization by using event schedules. Such event schedules can have different possible instantiations, each allowing additional complexity of real hardware systems to be integrated in to the optimization model.

Events can be used to describe white box temporal optimization. Events can be representative of an action being performed on a classical/quantum system over a period of time. The precise structure or behavior of an action is not represented, which means that events may represent a heterogeneous set of actions.

In particular, an event e can be defined as a non-negative, non-empty real interval of time

$$(1) \quad [L(e), R(e)) := \{0 \leq L(e) \leq t < R(e) \mid t \in \mathbb{R}\},$$

where L(e) and R(e) are called the left and right endpoints. The duration of an event e is $\Delta e := R(e) - L(e)$.

Moreover, two events $e1$ and $e2$ can be defined to overlap if and only if $e1 \cap e2$ is non-empty. If two events do not overlap, they are disjoint. The two events are adjacent if they do not overlap and $e1 \cup e2$ is an event. An event $e1$ can be defined to precede $e2$ if and only if $L(e1) < L(e2)$. This induces a temporal ordering

$$(2) \quad e1 \prec e2 \overset{\text{def}}{\Leftrightarrow} L(e1) < L(e2)$$

Accordingly, events $e1$ and $e2$ are adjacent if and only if $R(e1) = L(e2)$ or $R(e2) = L(e1)$. The proof for such a statement can be as follows: adjacency is symmetric; accordingly, without loss of generality, suppose in the following arguments that $e1 \prec e2$. Then the following can be defined: $e := e1 \cup e2$. By equation (1) above, and the fact the events do not overlap,

$$e = \{L(e) = L(e1) \leq t < R(e2) = R(e) \mid t \in \mathrm{R}\}.$$

Accordingly, there exists a points such that $e = [L(e), s) \cup [s, R(e)) =: e\mathrm{left} \cup e\mathrm{right}$ and $e\mathrm{left} = e1$. Then $s = R(e1)$. However, $e\mathrm{right}$ must be $e2$. Because, if that were not the case, then $e \backslash e1 \neq e2$, which violates the definition of $e$. Therefore $s = L(e2)$.

Further, supposing that R($e1$) # L($e2$), then either R($e1$) > L($e2$), which violates the fact that $e1$ and $e2$ do not overlap, or R($e1$) < L($e2$), which means there exists a point $t$ such that R($e1$) < $t$ < L($e2$), which violates the fact that $e1 \cup e2$ is an event.

For the Boolean predicate

$$(3) \quad P(a,b) := L(a) \leq L(b) < R(a).$$

the events $e1$ and $e2$ overlap if and only if

$$P(e1,e2) \vee P(e2,e1).$$

As proof for such a proposition, as implied by the disjunction, this proposition is symmetric in $e1$ and $e2$. Without loss of generality, the case that $e1 \preceq e2$ can be considered. The events $e1$ and $e2$ overlap if and only if $e1$ contains $L(e2)$, since $L(e2) > L(e1)$ by our ordering assumption. Were this not the case that $e1$ contained $L(e2)$, the intervals would be disjoint, with a spacing equal to R($e1$) -L($e2$). By the definition of an interval, this is true if and only if $L(e1) \leq L(e2) < R(e1)$.

Moreover, overlapping events can be combined, for example, by introducing a particular operator. Combination of two events can be performed with a designated function C and an operation called coalescing defined by

$$(4) \quad \mathrm{C}(a,b) := a \cup b$$

when $a$, $b$ are $P$ or adjacent, with $a \preceq b$.

When C is defined on $a$ and $b$, the events can be said to be coalescable. This definition of coalescing is intentionally not symmetric due to equation (3). The reason for this is because C can be used to accrete events (namely $b$) into existing events (namely $a$) that are in a given data structure.

One proposition can be that when defined, C($a$, $b$) is an event One proof for such a proposition can be that such a proposition is trivial from the fact that $a$ and $b$ are either adjacent or overlap, and as such, their union is a single, non-empty interval.

An additional proposition can be that the length of coalesced events satisfies a triangle inequality

$$\min\{\Delta e1, \Delta e2\} \leq \mathrm{C}(e1, e2) \leq \Delta e1 + \Delta e2.$$

Moreover, the lower bound equality is only satisfied when $L(e1) = L(e2)$. The upper bound equality is only satisfied when $e1$ and $e2$ are adjacent. As proof for such a proposition can be that the proposition is trivial from the set theoretic interpretation.

Moreover, it is possible to take an event and move it in time. An operator can be defined for this purpose. In particular, for any given event $e$ and time $t$ satisfying $L(e)+t \geq 0$, the shifting operator can be defined as

$$(5) \quad \sigma_t e := [L(e) + t, R(e) + t).$$

The absolute counterpart to the shifting operator can be the placing operator

$$(6) \quad \pi t e := \sigma t - L(e) e = [t, t + \Delta e).$$

The operators can satisfy various mathematical properties, such as the property that the operators compose according to $\sigma_s \sigma_t = \sigma_s + t$, and as such, when defined, the operators commute.

Formally, an event can be described as an interval; however, the event can be representative of some action being performed. A data structure representing an event may be augmented with additional information about precisely which action or actions it represents, with a suitable interpretation of coalescing. The assignment of actions to intervals can be a factor for determining when actions are to be performed.

One example can involve an extensible implementation of events. An event can be represented as a subclass of an abstract class called "event", which can contain information about the interval the event represents.

```
(defclass event ()
  ((left :initarg :left
         :accessor left)
   (right :initarg :right
          :accessor right)))
```

The example code above is an example using the Common Lisp Object System; an event can be represented using other types of codes, languages or systems.

This abstract class can be subclassed, in this example, into two cases: first, a representation of a self-contained event called "atomic-event", and second, a representation of an event composed of other events called "compound-event".

```
(defclass atomic-event (event)
  ())
(defclass compound-event (event)
  ((sub-events :initarg sub-events
               :accessor sub-events)))
```

The example code above is an example using the Common Lisp Object System; an atomic-event or a compound-event can be represented using other types of codes, languages or systems.

These two classes could be further subclassed for specialized behavior (e.g., distinguishing between pulses and qubit tune-up). A compound-event instance can be generated from an atomic-event instance, which can be done with a function called "lift".

```
(defun lift (e)
  (check-type e atomic-event)
  (make-instance 'compound-event
                 :left (left e)
                 :right (right e)
                 :sub-events (list e)))
```

The example code above is an example using the Common Lisp Object System; a lift function can be represented using other types of codes, languages or systems. Events being defined, a coalesce operator can therefore also be defined. First, the predicate can be encoded, which determines if two events are coalescable. This can represent a translation of the conditions of equation (4).

```
(defun coalescable (a b)
  (flet ((overlap (a b)
           (and (<= (left a)
                    (left b))
                (< (left b)
                   (right a))))
         (adjacent (a b)
           (= (right a) (left b))))
    (or (overlap a b) (adjacent a b))))
```

The example code above is an example using the Common Lisp Object System; a coalescable function can be represented using other types of codes, languages or systems.

Finally, default method definitions can be provided for a generic function called "coalesce", and can represent the C operator.

```
(defgeneric coalesce (a b)
  (:method :before ((a event) (b event))
    (assert (coalescable a b)))
  (:method ((a compound-event) (b compound-event))
    (make-instance 'compound-event
                      :left (left a)
                      :right (right b)
                      :sub-events (append (sub-events a)
                                          (sub-events b)))))
  (:method ((a atomic-event) (b atomic-event))
    (coalesce (lift a) (lift b)))
  (:method ((a atomic-event) (b compound-event))
    (coalesce (lift a) B))
  (:method ((a compound-event) (b atomic-event))
    (coalesce a (lift b))))
```

The example code above is an example using the Common Lisp Object System; a coalesce function can be represented using other types of codes, languages or systems.

The implementation can be simple because the case of coalescing compound events has been determined; accordingly, other cases can be reduced to it. Instances of compound-event can be ensured to have only atomic-event instances as sub-events. This implementation involves some of the algebraic nature of "transitively coalescable" set of compound-event instances with respect to C. A set of such events nearly forms a semigroup: there is no identity element (because events must be non-empty) and coalesceing is associative, but there is no total closure under C. Nonetheless, the set with C forms a semigroupoid. Further, the coalesce generic function can be further specialized (for example, by producing a new atomic event which can be produced by two existing atomic events).

Events can be built up to form larger, more complex constructs. One such construction was shown in the previous example with the compound-event class. However, events can occur in parallel. While not necessary in the formal sense, events can pertain to qubits. In fact, classical/quantum instruction code, such as Quil, may require that the notion of events happen in classical memory as well.

A resource schedule can be defined as a finite set of disjoint events. An indexed set of resource schedules can be called an event schedule or simply a schedule. A resource schedule can include events that pertain to any type of operation in the system (e.g., classical memory manipulation, quantum processor operation or classical processor operation). Resource schedules can be denoted generally with the capital letter S and event schedules can be denoted with the capital letter $\Sigma$.

Resource schedules can have a total order to the constituent events. This fact implies a convenient representation for some things, namely for the following equivalent definitions.

The close of a resource schedule $S$ can be defined as the least upper bound of $\{0\} \cup \bigcup_{e \in S} e$. Equivalently, if $en$ is the maximal element of $S$ in the temporal sense, then the close is $R(e_n)$. If a maximal element does not exist, then the close is 0. The close of $S$ can be denoted as Close$S$.

It can be proposed that these definitions are equivalent. As proof, it can be considered that when $S$ is empty, then the close is 0 in both cases. Further, when S is non-empty, because of the total order, $S$ can be written $e1 \prec e2 \prec \cdots \prec en,$ and $\sup(\{0\} \cup \bigcup_{e \in S} e) =$ sup$en$, which is $R(en)$ since the interval is half-open on the right Accordingly, an event schedule can be a series of rows, each of which contains non-overlapping, time-delimited events. However, what differentiates such from a simple table of entries is that the events can be "staggered" across rows. The question of what a suitable data structure should be for schedules can be characterized as a problem. In particular, the problem can be as follows.

In some implementations, a suitable data structure must answer the following questions efficiently: (Question 1) What are the events for qubit $q$? (Question 2) What are the soonest $k$ events to happen after time $t$? (Question 3) Which events happen between the times $t$ and $t+\Delta t$? (Question 4) When does the last event end for a particular qubit? For some qubits? For all qubits?

In addition, the following operations should be efficient: (Operation 1) Addition of a new event on a schedule at the soonest possible time. (Operation 2) Accretion of a collection of new events with a collection of existing events. (Operation 3) Iteration through events in temporal order. (Operation 4) Production of a list of temporally ordered sequence of time-qubit-event triples. This can exist for real-time streaming of events on dedicated processing hardware.

In a practical implementation, some of these questions require additional context to answer. Forinstance, the second operation of accreting a collection of events onto a schedule may be considered. It may be thatthis collection itself is constrained in some way which renders useless some sort of canonical accretion mechanism (for example, placing all events at the soonest times in each resource schedule). This notion of event accretion is one which can be formalized.

An accretive transformation can be defined as any function

$f$: Schedule $\rightarrow$ Schedule

satisfying the following properties. Consider a schedule $\Sigma = (S_1,...,S_n)$ and the resulting schedule

$$f(\Sigma) =: \Sigma' = (S_1',...,S_m')$$
. Let

$$M_i = \begin{cases} \{e_i\}, \\ \emptyset, \end{cases}$$

for temporally maximal $e_i \in S_i$ otherwise

Then $\Sigma'$ should satisfy the following properties. (Property 1) Schedule $\Sigma$ and resulting schedule $f(\Sigma)$ should have the same size, namely that $m = n$. (Property 2) Schedule $\Sigma$ and resulting schedule $f(\Sigma)$ should have the same trailing subsequences: Let the trailing subsequence of $S_i$ be the set $l_i := S_i \backslash M_i$. Then the subsequence that can be maintained can be $l_i \subset S_i'$. Further, additional events can succeed as $e \in l_i \Leftrightarrow e < e_i$. (Property 3) Moreover, $\Sigma'$ can satisfy the

same successor endpoint as follows. When they exist, let $p_i$ be the predecessors of $e_i$. Then necessarily $p_i \in S_i'$ by

the same trailing subsequences property. Let $q_i$ be the successors to $p_i$ within $S_i'$. The $q_i$ are guaranteed to exist. Then $L(q_i) = L(e_i)$ and $R(q_i) \geq R(e_i)$.

Accordingly, accretive transformations can only either add to resource schedules, or modify their maximal elements so long as the modification does not move them, or both. The transformations can be accretive specifically because they satisfy an accretion property.

In particular, considering a schedule $\Sigma = (S_1,...,S_n)$ and an accretively transformed $\Sigma' := f(\Sigma) = (S_1',...,S_n')$

. Then for all $i$, $\text{Close } S1 \leq \text{Close } S_i'$. As proof, it can be determined that from the same trailing subsequences rule, that all events up to the maximal of $S_i$ are maintained. Therefore, it can be sufficient to show that the maximal element has not shrunk. However, shrinking of the maximal element is prohibited by the same successor endpoint rule.

Accretive transformations are relatively general in what they can represent. Certain parameterized collections of accretive transformations can be of interest; for example, some useful parameters can include: resource schedule indexes, collections of events, and absolute and relative times.

The logic of the accretive transformation can be precisely what encodes any inter-event constraints. All three of the aforementioned parameters can be used in a particular example (described below), which embodies a principle behind blackbox temporal optimization-a method of organizing events so that they are accreted in lockstep. We will build up to this example with series of simpler building blocks.

As a first example, the identity function $I(\Sigma):=\Sigma$ can be the most trivial accretive transformation. As another example, considering a schedule $\Sigma$ and a distinguished resource schedule $S_k \in \Sigma$, Then for a given time $t$ and an event $e$, the function

$$\alpha k,t(e) := (S1,...,Sk,...Sn) \rightarrow (S1,...,Sk \cup \{\pi te\},...,Sn)$$

can map to a parameterized class of accretive transformations that place e onto resource schedule $S_k$ at time $t$, for suitable $t$.

It can be proposed that the transformation $\alpha_{k,t}(e)$ is an accretive transformation only when $t \geq R(\max S_k)$, where max is taken to mean the temporally maximal event. Proof for such a statement can be that since all resource schedules remain identical, which is accretive, how $S_k$ changes may only need to be considered. First some of the trivially satisfied rules can be considered. The transformation introduces no additional resource schedules, satisfying the same size rule. Only a union can be taken, satisfying the subsequence-maintained rule. Accordingly, the maximal element of the schedule being transformed remains (though may not be maximal) in the target set, satisfying the same successor endpoint rule. The only rule not considered is the additional events succeed rule. Since the new event is $\pi_t e$, it must be so that $L(\pi_t e)$

= $t$ is at least the close of $S_k$. This is the $t \geq R(\max Sk)$.

The particular example is as follows. Considering a schedule $\Sigma = (S_1,...,S_n)$ and a corresponding list of events $\vec{e} := (e1,...,e_n)$, the maximal close can be $\kappa := \max\{Close S_i | Si \in \Sigma\}$. Then the composition

$$A(\vec{e}) = \alpha n,\kappa(en) \circ \cdots \circ \alpha 1,\kappa(e1)$$

is an accretive transformation.

The particular example can represent an important step in an algorithm for black box temporal optimization of straight-line quantum programs. Namely, after the construction of a parallelized program, $A(\vec{e})$ can be applied successively to an empty schedule for each successive time slice of events $\vec{e}$. This demonstrates the general value of accretive transformations; they, along with coalescing, form the basis for catamorphic processing of programs and program-like data structures.

White box temporal optimization can represent an improvement over blackbox temporal optimization when scheduling quantum programs for execution. This can be accomplished by choosing more elaborate accretive transformations in the process of scheduling a program, which can be understood to be a series of state transitions of an abstract machine in the context of an operational semantics of the language.

In general, there is some correspondence between the capabilities of the abstract machine on which a program will be run and events that have to happen for each of the machine's supported transitions. A flexible but sufficiently general representation of interrelated events can be chosen, and an accretive transformation can be parameterized on that representation.

One convenient choice of representation are schedules with a fixed accretive transformation $\upsilon\Gamma$ applicable to any schedule $\Gamma$ representing an instruction. As described herein, a schedule can be used as a representation of a transformation of a (larger) schedule that is being computed iteratively. A schedule can be associated with each kind of abstract machine operation which defines the events and their temporal absolute relationship. For operations such as parametric gates, the schedules are likewise dependent on the same parameters of the gate. For example, an $R\chi(\theta)$ gate might synthesize into events whose durations are proportional to $\theta$ (mod $\pi$). In some aspects, this representation may not necessarily encode relative temporal invariance of the events contained within the schedule. Nonetheless, such representations, which we call elastic representations, can be constructed. The choice of representation can be a matter of a complexity-expressivity tradeoff.

Considering the schedules $\Sigma := (S1,...,Sn)$ and $\Gamma := (G1,...,Gn)$, one can define $\sigma_t S := \{\sigma_t e \mid e \in S\}$. The white box transformation $\upsilon\Gamma$ is the accretive transformation

$$(7) \quad \upsilon\Gamma(\Sigma) := (S1 \cup \sigma t G1,...,Sn \cup \sigma t Gn)$$

which minimizes t.

As an analogy, if $\Gamma$ is seen as an elaborate "Tetris" block (referring to the game TETRISO, available from Tetris Holdings), then $\upsilon\Gamma$ represents the falling of that block and subsequently settled placement of that block onto a given game state $\Sigma$. For any reasonable data structure, computing the minimal $t$ can be computed in $O(n)$ time, for schedules of $n$ resource schedules.

Returning to the problem posed above, reference is made to each of the four questions and operations noted above. Question 1 and Question 4 can be represented by a structure which makes resource schedules explicit. This can be a vector of such data structures. The resource schedules can be a record containing a list of events and a pointer to the last list cell. Operation 1 can be done by mutating the last list cell.

Questions 2 and Question 3 can be answered by way of an interval tree on all events in the schedule with in-order traversal. This also makes Operation 2 efficient. Operation 4 can also be made efficient if the qubit number is recorded within the event data structure.

In summary a vector of lists with knowledge of the pointer to the last element, along with a global interval tree of events, where events know which resource schedule they are in.

Scheduling programs with white box temporal optimization can now be described. Afewadditional ways to control scheduling are first discussed. First a subset of Quil can be defined, called ProtoQuil. (The quantum programming language Quil is described in the publication entitled "A Practical Quantum Instruction Set Architecture" by Smith et al., arXiv:1608.03355v2 [quant-ph], 17 Feb 2017.) ProtoQuil can be defined as a subset of Quil language consisting of static and parametric gates, measurement-for-effect, and the RESET instruction.

In Quil, and hence ProtoQuil, gates must necessarily act on specific subspaces of the ambient Hilbert space of which the quantum state of the machine is a part. For instance, there may not be a generic CNOT operator, but rather one that specifically acts on a tensor product of specific qubit spaces, like CNOT01 for a controlled X operator with control qubit 0 and target qubit 1.

As discussed above, each static gate can be associated with a schedule of events, and each parametric gate can be associated with a schedule likewise parameterized. Measurement for each qubit can also be associated with a schedule of events. Their incorporation into a schedule is straightforward. The RESET instruction might be implemented differently, having an accretive transformation similar to the synchronized behavior of the particular example, described above.

Quil can also allow for a mechanism for extending the semantics of how instructions are processed by particular tools by way of the pragma directive PRAGMA. Pragma directives can change the way following instructions are scheduled by injecting ProtoQuil semantics-preserving accretive transformations. This can be demonstrated by way of an example.

The following ProtoQuil program scheduled with whitebox temporal optimization can be considered.

```
X 0
H 1
```

The X and H gates can be scheduled in parallel provided that their schedule repr e sentations allow for it. S equencing of these operations in time can be done, for example, to perform X before H. A pragma directive can be added to make this explicit.

```
X 0

PRAGMA Seq "0 1"

H 1
```

Given a schedule $\Sigma := (S1,...,S_n)$, the Seq pragma can be defined by an accretive transformation $Seq(p,q)$ defined by adding a "no-op" or idle event to $S_q$ whose duration is $\Delta max\ Sp$.

Some of the subject matter and operations described in this specification can be implemented in digital electronic circuitry, or in computer software, firmware, or hardware, including the structures disclosed in this specification and their structural equivalents, or in combinations of one or more of them. Some of the subject matter described in this specification can be implemented as one or more computer programs, i.e., one or more modules of computer program instructions, encoded on a computer storage medium for execution by, or to control the operation of, data-processing apparatus. Although certain example code is provided above using the Common Lisp Object System, the subject matter described in this specification can be implemented using other types of codes, languages, and systems. A computer storage medium can be, or can be included in, a computer-readable storage device, a computer-readable storage substrate, a random or serial access memory array or device, or a combination of one or more of them. The computer storage medium can also be, or be included in, one or more separate physical components or media (e.g., multiple CDs, disks, or other storage devices).

Some of the operations described in this specification can be implemented as operations performed by a data processing apparatus on data stored on one or more computer-readable storage devices or received from other sources.

The term "data-processing apparatus" encompasses all kinds of apparatus, devices, and machines for processing data, including by way of example a quantum processor, a programmable processor, a computer, a system on a chip, or multiple ones, or combinations, of the foregoing. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program, or in multiple coordinated files (e.g., files that store one or more modules, sub programs, or portions of code). A computer program can be deployed to be executed on one computer or on multiple computers that are located at one site or distributed across multiple sites and interconnected by a communication network.

Processors suitable for the execution of a computer program include, by way of example, quantum processors, general and special purpose microprocessors, and processors of any kind of digital computer. Elements of a computer can include a processor that performs actions in accordance with instructions, and one or more memory devices that store the instructions and data. Moreover, Devices suitable for storing computer program instructions and data include all forms of non-volatile memory, media and memory devices, including by way of example semiconductor memory devices (e.g., EPROM, EEPROM, flash memory devices, and others), magnetic disks (e.g., internal hard disks, removable disks, and others), magneto optical disks, and CD ROM and DVD-ROM disks. In some cases, the processor and the memory can be supplemented by, or incorporated in, special purpose logic circuitry.

To provide for interaction with a user, operations can be implemented on a computer having a display device (e.g., a monitor, or another type of display device) for displaying information to the user and a keyboard and a pointing device (e.g., a mouse, a trackball, a tablet, a touch sensitive screen, or another type of pointing device) by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

A computer system may include a single computing device, or multiple computers that operate in proximity or generally remote from each other and typically interact through a communication network. Examples of communication networks include a local area network ("LAN") and a wide area network ("WAN"), an inter-network (e.g., the Internet), a network comprising a satellite link, and peer-to-peer networks (e.g., ad hoc peer-to-peer networks). A relationship of client and server may arise by virtue of computer programs running on the respective computers and having a client-server relationship to each other.

While this specification contains many details, these should not be understood as limitations on the scope of what may be claimed, but rather as descriptions of features specific to particular examples. Certain features that are described in this specification or shown in the drawings in the context of separate implementations can also be combined. Conversely, various features that are described or shown in the context of a single implementation can also be implemented in multiple embodiments separately or in any suitable subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems can generally be integrated together in a single product or packaged into multiple products.

A number of embodiments have been described. Nevertheless, it will be understood that various modifications can be made.

**Claims**

1. A hybrid computing method (300) comprising:

   identifying (302) a program to be executed in a hybrid computing system, the hybrid computing system comprising:

      a control system (110) comprising classical computing resources, the classical computing resources comprising a classical processor (112) and a classical memory (114); and
      quantum computing resources comprising a quantum processor (102) that defines qubits, wherein the qubits comprise a first qubit and a second qubit;

   by operation of the control system, identifying (306) a set of events pertaining to operations involved with executing the program, the set of events comprising events pertaining to operations to be executed using the respective quantum computing resources and one or more events pertaining to operations to be executed using the classical memory of the classical computing resources, wherein the events pertaining to operations to be executed using the respective quantum computing resources comprise a first event pertaining to an application of a first quantum logic gate to the first qubit;
   by operation of the control system, generating (308) an event schedule comprising resource schedules for the respective qubits, wherein the generated schedule is such that the first quantum logic gate is applied to the first qubit earlier to reduce an idle time of the first qubit; and

executing (310) the event schedule in the hybrid computing system, wherein the event schedule, when executed in the hybrid computing system, coordinates operation of the quantum processor, the classical processor, and the classical memory.

2. The hybrid computing method of claim 1, wherein the qubits are defined by qubit devices housed in the quantum processor, and executing the event schedule comprises:

generating control signals; and
delivering the control signals to the quantum processor.

3. A hybrid computing system comprising:
quantum computing resources comprising a quantum processor (102) that defines qubits, wherein the qubits comprise a first qubit and a second qubit; and
a control system (110) comprising classical computing resources, the classical computing resources comprising a classical processor (112) and a classical memory (114), the control system configured to perform operations comprising:

identifying (306) a set of events pertaining to operations to execute a program in the hybrid computing system, the set of events comprising events pertaining to operations to be executed using the respective quantum computing resources and one or more events pertaining to operations to be executed using the classical memory of the classical computing resources, wherein the events pertaining to operations to be executed using the respective quantum computing resources comprise a first event pertaining to an application of a first quantum logic gate to the first qubit;
generating (308) an event schedule comprising resource schedules for the respective qubits, wherein the event schedule, when executed in the hybrid computing system, coordinates operation of the quantum processor, the classical processor, and the classical memory, wherein the generated schedule is such that the first quantum logic gate is applied to the first qubit earlier to reduce an idle time of the first qubit.

4. The hybrid computing method of claim 1 or the hybrid computing system of claim 3, wherein the event schedule comprises resource schedules for:

the respective qubits, and
the classical processor and the classical memory.

5. The hybrid computing method of claim 1 or the hybrid computing system of claim 3, wherein identifying the set of events comprises:

obtaining hardware-independent instructions from the program;
based on the hardware-independent instructions, generating (304) native instructions for computing resources of the hybrid computing system; and
identifying the set of events based on the native instructions.

6. The hybrid computing method of claim 1 or the hybrid computing system of claim 3, wherein the set of events comprises at least one of:

application of a quantum logic gate to one or more of the qubits;
measurement of a quantum state of one or more of the qubits; and
storing a quantum state measurement into the classical memory in the hybrid computing system.

7. The hybrid computing system of claim 3, wherein the qubits are defined by qubit devices housed in the quantum processor, and the system further comprises a signal delivery system configured to deliver control signals between the quantum processor and the control system.

8. The hybrid computing method of claim 2 or the hybrid computing system of claim 7, wherein the quantum processor comprises the qubit devices and readout devices, and executing the event schedule comprises delivering the control signals to respective qubit devices and readout devices in the quantum processor.

9. The hybrid computing method of claim 1 or the hybrid computing system of claim 3, wherein the hybrid computing system is configured to perform asynchronous classical and quantum computation.

10. The hybrid computing method of claim 1 or the hybrid computing system of claim 3, wherein the hybrid computing system is configured to perform hybrid classical/quantum computation with error correction.

11. The hybrid computing method of claim 1 or the hybrid computing system of claim 3, wherein the quantum computing resources comprise:

   qubit devices that define the qubits in the quantum processor; and
   signal lines configured to deliver control signals to the qubit devices,
   wherein the one or more events pertaining to operations to be executed using the respective quantum computing resources comprise delivery of control signals to respective qubit devices.

12. The hybrid computing method of claim 1 or the hybrid computing system of claim 3, wherein the one or more events pertaining to operations to be executed using the classical memory of the classical computing resources comprise: storage of values in the classical memory, and optionally wherein the values comprise measurements obtained by measuring quantum states of the qubits.

13. The hybrid computing method of claim 1 or the hybrid computing system of claim 3, wherein the event schedule, when executed in the hybrid computing system, synchronizes at least one operation performed by a classical computing resource with at least one operation performed by a quantum computing resource.

14. The hybrid computing method of claim 1 or the hybrid computing system of claim 3, wherein identifying the set of events comprises identifying respective second events for the first and second qubits pertaining to the application of a second quantum logic gate.


**Patentansprüche**

1. Hybrides Computing-Verfahren (300), umfassend: Identifizieren (302) eines Programms, das in einem hybriden Computing-System ausgeführt werden soll, wobei das hybride Computing-System umfasst:

   ein Steuersystem (110), das klassische Computing-Ressourcen umfasst, wobei die klassischen Computing-Ressourcen einen klassischen Prozessor (112) und einen klassischen Speicher (114) umfassen; und
   Quanten-Computing-Ressourcen, die einen Quantenprozessor (102) umfassen, der Qubits definiert, wobei die Qubits ein erstes Qubit und ein zweites Qubit umfassen;
   durch den Betrieb des Steuersystems, Identifizieren (306) eines Satzes von Ereignissen, die sich auf Operationen beziehen, die bei der Ausführung des Programms involviert sind, wobei der Satz von Ereignissen umfasst: Ereignisse, die sich auf Operationen beziehen, die unter Verwendung der jeweiligen Quanten-Computing-Ressourcen ausgeführt werden sollen, und ein oder mehrere Ereignisse, die sich auf Operationen beziehen, die unter Verwendung des klassischen Speichers der klassischen Computing-Ressourcen ausgeführt werden sollen, wobei die Ereignisse, die sich auf Operationen beziehen, die unter Verwendung der jeweiligen Quanten-Computing-Ressourcen ausgeführt werden sollen, ein erstes Ereignis umfassen, das sich auf eine Anwendung eines ersten Quanten-Logikgatters auf das erste Qubit bezieht;
   durch den Betrieb des Steuersystems, Erzeugen (308) eines Ereigniszeitplans, der Ressourcenzeitpläne für die jeweiligen Qubits umfasst, wobei der erzeugte Zeitplan so ist, dass das erste Quanten-Logikgatter auf das erste Qubit früher angewendet wird, um eine Inaktivzeit des ersten Qubits zu reduzieren; und
   Ausführen (310) des Ereigniszeitplans im hybriden Computing-System, wobei der Ereigniszeitplan, wenn im hybriden Computing-System ausgeführt, den Betrieb des Quanten-Prozessors, des klassischen Prozessors und des klassischen Speichers koordiniert.

2. Hybrides Computing-Verfahren nach Anspruch 1, wobei die Qubits durch Qubit-Vorrichtungen definiert werden, die im Quantenprozessor untergebracht sind, und das Ausführen des Ereigniszeitplans umfasst:

   Erzeugen von Steuersignalen; und
   Liefern der Steuersignale an den Quantenprozessor.

3. Hybrides Computing-System, das umfasst:

Quanten-Computing-Ressourcen, die einen Quantenprozessor (102) umfassen, der Qubits definiert, wobei die Qubits ein erstes Qubit und ein zweites Qubit umfassen; und

ein Steuersystem (110), das klassische Computing-Ressourcen umfasst, wobei die klassischen Computing-Ressourcen einen klassischen Prozessor (112) und einen klassischen Speicher (114) umfassen, wobei das Steuersystem dazu ausgelegt ist, Operationen durchzuführen, die umfassen:

Identifizieren (306) eines Satzes von Ereignissen, die sich auf Operationen zum Ausführen eines Programms im hybriden Computing-System, wobei der Satz von Ereignissen umfasst: Ereignisse, die sich auf Operationen beziehen, die unter Verwendung der jeweiligen Quanten-Computing-Ressourcen ausgeführt werden sollen, und ein oder mehrere Ereignisse, die sich auf Operationen beziehen, die unter Verwendung des klassischen Speichers der klassischen Computing-Ressourcen ausgeführt werden sollen, wobei die Ereignisse, die sich auf Operationen beziehen, die unter Verwendung der jeweiligen Quanten-Computing-Ressourcen ausgeführt werden sollen, ein erstes Ereignis umfassen, das sich auf eine Anwendung eines ersten Quanten-Logikgatters auf das erste Qubit bezieht;

Erzeugen (308) eines Ereigniszeitplans, der Ressourcenzeitpläne für die jeweiligen Qubits umfasst, wobei der Zeitplan, wenn im hybriden Computing-System ausgeführt, den Betrieb des Quantenprozessors, des klassischen Prozessors und des klassischen Speichers koordiniert, wobei der erzeugte Zeitplan so ist, dass das erste Quanten-Logikgatter auf das erste Qubit früher angewendet wird, um eine Inaktivzeit des ersten Qubits zu reduzieren.

4. Hybrides Computing-Verfahren nach Anspruch 1 oder hybrides Computing-System nach Anspruch 3, wobei der Ereigniszeitplan Ressourcenzeitpläne umfasst für:

die jeweiligen Qubits, und
den klassischen Prozessor und den klassischen Speicher.

5. Hybrides Computing-Verfahren nach Anspruch 1 oder hybrides Computing-System nach Anspruch 3, wobei das Identifizieren des Satzes von Ereignissen umfasst:

Erhalten von hardwareunabhängigen Anweisungen vom Programm;
basierend auf den hardwareunabhängigen Anweisungen, Erzeugen (304) nativer Anweisungen für Computing-Ressourcen des hybriden Computing-Systems; und
Identifizieren des Satzes von Ereignissen basierend auf den nativen Anweisungen.

6. Hybrides Computing-Verfahren nach Anspruch 1 oder hybrides Computing-System nach Anspruch 3, wobei der Satz von Ereignissen mindestens eines von Folgendem umfasst:

Anwendung eines Quanten-Logikgatters auf ein oder mehrere der Qubits;
Messung eines Quantenzustands eines oder mehrerer der Qubits; und
Speichern einer Quantenzustandsmessung in den klassischen Speicher im hybriden Computing-System.

7. Hybrides Computing-System nach Anspruch 3, wobei die Qubits durch Qubit-Vorrichtungen definiert werden, die im Quantenprozessor untergebracht sind, und das System ferner ein Signalliefersystem umfasst, das dazu ausgelegt ist, Steuersignale zwischen dem Quantenprozessor und dem Steuersystem zu liefern.

8. Hybrides Computing-Verfahren nach Anspruch 2 oder hybrides Computing-System nach Anspruch 7, wobei der Quantenprozessor die Qubit-Vorrichtungen und Auslesevorrichtungen umfasst, und das Ausführen des Ereigniszeitplans das Liefern der Steuersignale an jeweilige Qubit-Vorrichtungen und Auslesevorrichtungen im Quantenprozessor umfasst.

9. Hybrides Computing-Verfahren nach Anspruch 1 oder hybrides Computing-System nach Anspruch 3, wobei das hybride Computing-System dazu ausgelegt ist, asynchrone klassische und Quanten-Berechnung durchzuführen.

10. Hybrides Computing-Verfahren nach Anspruch 1 oder hybrides Computing-System nach Anspruch 3, wobei das hybride Computing-System dazu ausgelegt ist, hybride klassische/Quanten-Berechnung mit Fehlerkorrektur durchzuführen.

11. Hybrides Computing-Verfahren nach Anspruch 1 oder hybrides Computing-System nach Anspruch 3, wobei die Quanten-Computing-Ressourcen umfassen:

Qubit-Vorrichtungen, die die Qubits im Quantenprozessor definieren; und
Signalleitungen, die dazu ausgelegt sind, Steuersignale an die Qubit-Vorrichtungen zu liefern,
wobei das eine oder die mehreren Ereignisse, die sich auf Operationen beziehen, die unter Verwendung der jeweiligen Quanten-Computing-Ressourcen ausgeführt werden sollen, die Lieferung von Steuersignalen an jeweilige Qubit-Vorrichtungen umfassen.

12. Hybrides Computing-Verfahren nach Anspruch 1 oder hybrides Computing-System nach Anspruch 3, wobei das eine oder die mehreren Ereignisse, die sich auf Operationen beziehen, die unter Verwendung des klassischen Speichers der klassischen Computing-Ressourcen ausgeführt werden sollen, umfassen:
Speicherung von Werten im klassischen Speicher, und optional wobei die Werte Messungen umfassen, die durch Messen von Quantenzuständen der Qubits erhalten werden.

13. Hybrides Computing-Verfahren nach Anspruch 1 oder hybrides Computing-System nach Anspruch 3, wobei der Ereigniszeitplan, wenn im hybriden Computing-System ausgeführt, mindestens eine Operation, die durch eine klassische Computing-Ressource durchgeführt wird, mit mindestens einer Operation synchronisiert wird, die durch eine Quanten-Computing-Ressource durchgeführt wird.

14. Hybrides Computing-Verfahren nach Anspruch 1 oder hybrides Computing-System nach Anspruch 3, wobei das Identifizieren des Satzes von Ereignissen das Identifizieren jeweiliger zweiter Ereignisse für das erste und zweite Qubit umfasst, die sich auf die Anwendung eines zweiten Quanten-Logikgatters beziehen.


**Revendications**

1. Procédé informatique hybride (300), comprenant :
l'identification (302) d'un programme à exécuter dans un système informatique hybride, le système informatique hybride comprenant :

un système de commande (110) comprenant des ressources informatiques classiques, les ressources informatiques classiques comprenant un processeur classique (112) et une mémoire classique (114) ; et
des ressources informatiques quantiques comprenant un processeur quantique (102) qui définit des qubits, les qubits comprenant un premier qubit et un deuxième qubit ;
par une opération du système de commande, l'identification (306) d'un ensemble d'événements relatifs à des opérations impliquées dans l'exécution du programme, l'ensemble d'événements comprenant des événements relatifs à des opérations à exécuter à l'aide des ressources informatiques quantiques respectives et un ou plusieurs événements relatifs à des opérations à exécuter à l'aide de la mémoire classique des ressources informatiques classiques, les événements relatifs à des opérations à exécuter à l'aide des ressources informatiques quantiques respectives comprenant un premier événement relatif à une application d'une première grille logique quantique au premier qubit ;
par une opération du système de commande, la génération (308) d'un ordonnancement d'événements comprenant des ordonnancements de ressources pour les qubits respectifs, l'ordonnancement généré étant tel que la première grille logique quantique est appliquée plus tôt au premier qubit afin de réduire un temps d'inactivité du premier qubit ; et
l'exécution (310) de l'ordonnancement d'événements dans le système informatique hybride, l'ordonnancement d'événements, lorsqu'il est exécuté dans le système informatique hybride, coordonnant les opérations du processeur quantique, du processeur classique et de la mémoire classique.

2. Procédé informatique hybride selon la revendication 1, dans lequel les qubits sont définis par des dispositifs de qubits logés dans le processeur quantique, et l'exécution de l'ordonnancement d'événements comprend :

la génération de signaux de commande ; et
la délivrance des signaux de commande au processeur quantique.

3. Système informatique hybride, comprenant :

des ressources informatiques quantiques comprenant un processeur quantique (102) qui définit des qubits, les qubits comprenant un premier qubit et un deuxième qubit ; et

un système de commande (110) comprenant des ressources informatiques classiques, les ressources informatiques classiques comprenant un processeur classique (112) et une mémoire classique (114), le système de commande étant configuré pour exécuter des opérations comprenant :

l'identification (306) d'un ensemble d'événements relatifs à des opérations pour exécuter un programme dans le système informatique hybride, l'ensemble d'événements comprenant des événements relatifs à des opérations à exécuter à l'aide des ressources informatiques quantiques respectives et un ou plusieurs événements relatifs à des opérations à exécuter à l'aide de la mémoire classique des ressources informatiques classiques, les événements relatifs à des opérations à exécuter à l'aide des ressources informatiques quantiques respectives comprenant un premier événement relatif à une application d'une première grille logique quantique au premier qubit ;

la génération (308) d'un ordonnancement d'événements comprenant des ordonnancements de ressources pour les qubits respectifs, l'ordonnancement d'événements, lorsqu'il est exécuté dans le système informatique hybride, coordonnant les opérations du processeur quantique, du processeur classique et de la mémoire classique, l'ordonnancement généré étant tel que la première grille logique quantique est appliquée plus tôt au premier qubit afin de réduire un temps d'inactivité du premier qubit.

4. Procédé informatique hybride selon la revendication 1, ou système informatique hybride selon la revendication 3, dans lequel l'ordonnancement d'événements comprend des ordonnancements de ressources pour :

les qubits respectifs, et
le processeur classique et la mémoire classique.

5. Procédé informatique hybride selon la revendication 1, ou système informatique hybride selon la revendication 3, dans lequel l'identification de l'ensemble d'événements comprend :

l'obtention d'instructions indépendantes du matériel à partir du programme ;
sur la base des instructions indépendantes du matériel, la génération (304) d'instructions natives pour des ressources informatiques du système informatique hybride ; et
l'identification de l'ensemble d'événements sur la base des instructions natives.

6. Procédé informatique hybride selon la revendication 1, ou système informatique hybride selon la revendication 3, dans lequel l'ensemble d'événements comprend au moins l'un des événements suivants :

application d'une grille logique quantique à un ou plusieurs des qubits ;
mesure d'un état quantique d'un ou plusieurs des qubits ; et
stockage d'une mesure d'état quantique dans la mémoire classique du système informatique hybride.

7. Système informatique hybride selon la revendication 3, dans lequel les qubits sont définis par des dispositifs de qubits logés dans le processeur quantique, et le système comprend en outre un système de distribution de signal configuré pour délivrer des signaux de commande entre le processeur quantique et le système de commande.

8. Procédé informatique hybride selon la revendication 2, ou système informatique hybride selon la revendication 7, dans lequel le processeur quantique comprend les dispositifs de qubits et des dispositifs de lecture, et l'exécution de l'ordonnancement d'événements comprend la délivrance des signaux de commande à des dispositifs de qubits et dispositifs de lecture respectifs du processeur quantique.

9. Procédé informatique hybride selon la revendication 1, ou système informatique hybride selon la revendication 3, dans lequel le système informatique hybride est configuré pour exécuter un calcul classique et quantique asynchrone.

10. Procédé informatique hybride selon la revendication 1, ou système informatique hybride selon la revendication 3, dans lequel le système informatique hybride est configuré pour exécuter un calcul classique / quantique hybride avec correction d'erreurs.

11. Procédé informatique hybride selon la revendication 1, ou système informatique hybride selon la revendication 3, dans lequel les ressources informatiques quantiques comprennent :

des dispositifs de qubits qui définissent les qubits dans le processeur quantique ; et
des lignes de signaux configurées pour délivrer des signaux de commande aux dispositifs de qubits,
le ou les événements relatifs à des opérations à exécuter à l'aide des ressources informatiques quantiques respectives comprenant la délivrance de signaux de commande à des dispositifs de qubits respectifs.

12. Procédé informatique hybride selon la revendication 1, ou système informatique hybride selon la revendication 3, dans lequel le ou les événements relatifs à des opérations à exécuter à l'aide de la mémoire classique des ressources informatiques classiques comprennent :
le stockage de valeurs, dans la mémoire classique, et dans lequel, éventuellement, les valeurs comprennent des mesures obtenues par mesure d'états quantiques des qubits.

13. Procédé informatique hybride selon la revendication 1, ou système informatique hybride selon la revendication 3, dans lequel l'ordonnancement d'événements, lorsqu'il est exécuté dans le système informatique hybride, synchronise au moins une opération exécutée par une ressource informatique classique avec au moins une opération exécutée par une ressource informatique quantique.

14. Procédé informatique hybride selon la revendication 1, ou système informatique hybride selon la revendication 3, dans lequel
l'identification de l'ensemble d'événements comprend l'identification de deuxièmes événements respectifs pour les premier et deuxième qubits relatifs à l'application d'une deuxième grille logique quantique.

100

CONTROL SYSTEM 110

PROCESSOR(S) 112

MEMORY 114

SIGNALING HARDWARE 116

SIGNAL DELIVERY SYSTEM 106

QUANTUM PROCESSOR CELL 102

QUANTUM CIRCUIT SYSTEM 104

QUANTUM COMPUTING SYSTEM

# Fig. 1A

EP 3 593 296 B1

Fig. 1B

Fig. 2A

Fig. 2B

300

302 — OBTAIN QUANTUM PROGRAM

304 — GENERATE NATIVE INSTRUCTIONS

306 — IDENTIFY EVENTS

308 — GENERATE EVENT SCHEDULE

310 — EXECUTE SCHEDULE

Fig. 3

Fig. 4

502

| | H 0 |
|---|---|
| | CNOT 0 1 |
| | X 0 |
| I | idle |

{QUBIT 0}

{QUBIT 1}

# Fig. 5A

504

| | H 0 |
|---|---|
| | CNOT 0 1 |
| | X 0 |
| I | idle |

{QUBIT 0}

{QUBIT 1}

# Fig. 5B

**EP 3 593 296 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SMITH et al.** A Practical Quantum Instruction Set Architecture. *arXiv:1608.03355v2,* 17 February 2017